**Europäisches Patentamt**

**European Patent Office**

**Office européen des brevets**

(19)

(11) Veröffentlichungsnummer: **0 108 876**
**B1**

(12) # EUROPÄISCHE PATENTSCHRIFT

(45) Veröffentlichungstag der Patentschrift:
03.02.88

(51) Int. Cl.⁴: **G 01 P 5/18**

(21) Anmeldenummer: **83108611.1**

(22) Anmeldetag: **01.09.83**

(54) **Sensor zur Detektion zufälliger, zur korrelativen Signalverarbeitung geeigneter Signale.**

(30) Priorität: **27.09.82 DE 3235750**

(43) Veröffentlichungstag der Anmeldung:
**23.05.84 Patentblatt 84/21**

(45) Bekanntmachung des Hinweises auf die Patenterteilung:
**03.02.88 Patentblatt 88/5**

(84) Benannte Vertragsstaaten:
**CH FR GB IT LI NL SE**

(56) Entgegenhaltungen:
**DE-A-2 532 033**
**DE-A-2 532 060**
**DE-A-2 544 825**
**DE-A-2 553 321**
**FR-A-2 365 801**

**Measurement and Instrumentation ACTA IMEKO
1973
Berichte des 6. Kongresses der Information der
Masstechnischen Konföderation, Vol. II.
Herausgeber: Gy. Strikor et al.
1974, North-Holland Publishing Co. Amsterdam
(NE), London (GB) American Elsevior Publishing
Co., Inc. New York (US)
R. Fritsche, F. Mesch: "Vergleich von
Ortsfrequenzfilterung und Korrelationsverfahren
zur berührungslosen Geschwindigkeitsmessung"
Bericht B-521 Seiten 579 589**

(73) Patentinhaber: **Endress u. Hauser GmbH u.Co.,
Hauptstrasse 1, D-7867 Maulburg (DE)**

(72) Erfinder: **Massen, Robert, Dr., Kämpfenstrasse 39,
D-7760 Radolfzell 18 (DE)**

(74) Vertreter: **Leiser, Gottfried, Dipl.- Ing.,
Patentanwälte Prinz, Leiser, Bunke & Partner
Manzingerweg 7, D-8000 München 60 (DE)**

EP 0 108 876 B1

**Beschreibung**

Die Erfindung betrifft einen Sensor zur Detektion zufälliger, zur korrelativen Signalverarbeitung geeigneter Signale aus einem relativ zum Sensor bewegten Prozeß, insbesondere für die korrelative Geschwindigkeits- oder Laufzeitmessung, mit einer für eine Kenngröße des bewegten Prozesses empfindlichen Gesamt-Apertur, die unter Einfügung von für die Kenngröße des bewegten Prozesses unempfindlichen Lücken in entlang der Bewegungsrichtung angeordnete Apertursegmente unterteilt ist.

Bekanntlich besteht das Prinzip der korrelativen Geschwindigkeits- oder Laufzeitmessung darin, mit Hilfe von meist berührungslosen Sensoren an zwei in der Bewegungsrichtung im Abstand voneinander liegenden Stellen des bewegten Prozesses zufällige Signale zu entnehmen, die Kreuzkorrelationsfunktion beider Signale zu bilden und aus der Lage des Maximums eine Information über die Laufzeit und die Geschwindigkeit des bewegten Prozesses zu gewinnen. Die Sensoren sind so gewählt, daß sie auf eine möglichst signifikante oder leicht zu erfassende Kenngröße des bewegten Prozesses ansprechen. Beispielsweise können kapazitive Sensoren, Ultraschallsensoren, optische Sensoren, thermische Sensoren, ladungsempfindliche Sensoren oder Leitfähigkeitssensoren angewendet werden. Alle diese Sensoren erfassen einen bestimmten Raumausschnitt, der in der Bewegungsrichtung des bewegten Prozesses eine endliche Ausdehnung hat, die in Anlehnung an optische Systeme als "Blende" oder "Apertur" bezeichnet wird. Bekanntlich stellt jede Apertur ein räumliches Filter ("Ortsfrequenzfilter") dar. Das eine von der Geometrie und der Geschwindigkeit des bewegten Prozesses abhängige obere Grenzfrequenz hat. Dadurch ist die Bandbreite der erfaßten Signale begrenzt. Nun ist jedoch die Breite des Korrelationsmaximums, die wiederum für die statistische Unsicherheit der Korrelationsauswertung maßgeblich ist, umgekehrt proportional zur Bandbreite. Für eine genaue Korrelationsauswertung ist es daher erforderlich, daß die beiden zu korrelierenden Signale eine möglichst große Bandbreite besitzen. Dies bedeutet, daß die Apertur der Sensoren, also die Ausdehnung in der Bewegungsrichtung, möglichst klein sein soll.

Andererseits setzt eine gute Korrelation voraus, daß die Sensoren eine ausreichende Empfindlichkeit haben. Die Empfindlichkeit eines Sensors kann insbesondere durch die Vergrößerung des betrachteten Raumausschnittes, also durch eine größere Apertur, gesteigert werden. Beispielsweise wird ein kapazitiver Sensor dadurch empfindlicher, daß größere Elektroden verwendet werden. Insbesondere bei der Messung von Strömungsgeschwindigkeiten in Rohrleitungen mit großem Querschnitt müssen z.Zt. relativ große Elektrodenflächen benutzt werden, damit die Kapazität und die Empfindlichkeit des Sensors ausreichen. Ein Beispiel hierfür ist die korrelative Geschwindigkeitsmessung an pneumatisch geförderten Feststoffen, wie Weizen, Granulaten, Kohlestaub usw., wo oft große Rohrquerschnitte verwendet werden. Durch die Vergrößerung der Apertur wird aber wiederum die Tiefpaßfilterwirkung der Sensoren verstärkt, so daß die Bandbreite der detektierten Signale sinkt. Demzufolge ist die statistische Unsicherheit des Meßergebnisses groß. Zur Verringerung der statistischen Unsicherheit muß die Meßzeit sehr groß gewählt werden.

Bei einem aus der DE-A1-2 544 825 bekannten Sensor zur berührungslosen Abtastung bewegter Oberflächen sind zwei Meßfühler mit identisch geformten Abtastflächen im Abstand voneinander angeordnet. Die Gesamt-Apertur des Sensors ist somit unterteilt in zwei für eine Kenngröße der bewegten Oberfläche empfindliche Apertursegmente, die den Abtastflächen der beiden Meßfühler entsprechen, wobei zwischen die beiden Apertursegmente eine für die Kenngröße der bewegten Oberfläche unempfindliche Lücke eingefügt ist. Als Ausgangssignal des Sensors wird ein Differenzsignal aus den Ausgangssignalen der beiden Meßfühler gebildet. Die Bildung eines Differenzsignals ergibt einerseits eine Gleichsignalunterdrückung und andrerseits infolge des Ortsfrequenzgangs eine Bandbegrenzung zu hohen Frequenzen hin. Eine größere Empfindlichkeit könnte auch bei diesem bekannten Sensor nur durch Vergrößerung der Abtastflächen der beiden Meßfühler erreicht werden, was zwangsläufig eine Verringerung der Bandbreite und die damit verbundenen Nachteile zur Folge hätte.

Aufgabe der Erfindung ist demgegenüber die Schaffung eines Sensors, der trotz einer zur Erzielung ausreichend hoher Empfindlichkeit entsprechend großen räumlichen Ausdehnung in der Bewegungsrichtung ein für die korrelative Signalverarbeitung geeignetes Ausgangssignal großer Bandbreite liefert.

Nach der Erfindung wird diese Aufgabe bei einem Sensor der eingangs genannten Art dadurch gelöst, daß die Apertursegmente und Lücken nach einer beim korrelativen Empfang ein zeitkomprimiertes Signal ergebenden binären Codierung in der Bewegungsrichtung angeordnet sind und daß die Ausgangssignale der Apertursegmente summiert werden.

Die Erfindung beruht auf der Eigenschaft von aus dem Bereich der statistischen Nachrichtentechnik bekannten binären Codes zur Datenübertragung, welche trotz einer großen gesamten Zeitdauer beim korrelativen Empfang ein zeitkomprimiertes Signal ergeben (Korrelations-Codes, Barker-Codes, binäre pseudozufällige Codes, m-Sequenzen usw.). Es sind auch binäre Codes bekannt, deren spektrale Eigenschaften bestimmten Gesetzmäßigkeiten gehorchen, indem z. B. ihr Spektrum eine große Ähnlichkeit mit dem eines Einzelimpulses hat. Als typisches Beispiel hierfür kann die Klasse der pseudo-noise-Sequenzen angegeben werden, die zu den binären pseudozufälligen Codes gehören. Als pseudo-noise-Sequenzen bezeichnet man binäre Zufallsmuster, die sich nach einer bestimmten Periode wiederholen. Innerhalb einer solchen Periode ist die pseudo-noise-Sequenz vollständig beschrieben. Die Einhüllende des Spektrums einer pseudo-noise-Sequenz ist gleich dem Verlauf der Spektraldichte eines Einzelimpulses, nämlich die bekannte sin x/x-Funktion, auch Spaltfunktion genannt. Der wesentliche Unterschied besteht darin, daß das Spektrum der pseudo-noise-Sequenz aus N diskreten Spektrallinien besteht, wenn N die durch die Bit-Zahl ausgedrückte Periode der pseudo-noise-Sequenz darstellt. Insbesondere für längere Perioden sind die Unterschiede zwischen beiden Spektren sehr klein.

Durch die Aufteilung der Gesamt-Apertur eines Sensors nach der Gesetzmäßigkeit eines solchen Codes wird erreicht, daß die Stoßantwort des so gebildeten Ortsfrequenzfilters gleich dem Zeitverlauf der Codesequenz und der Frequenzgang des durch die Sensorapertur gebildeten Ortsfrequenzfilters gleich dem Spektrum dieser Codesequenz sind. Insbesondere ist die Grenzfrequenz dieses Ortsfreguenzfilters unabhängig von der räumlichen Ausdehnung, in der Bewegungsrichtung gesehen, und nur von der Länge des schmalsten vorkommenden Codesegments abhängig. Obwohl also die Empfindlichkeit des Sensors entsprechend der Anzahl der vorhandenen Apertursegmente vergrößert ist, hat der Sensor eine Grenzfrequenz, die derjenigen eines einzelnen Apertursegments entspricht. Somit ist bei gleicher Grenzfrequenz die Empfindlichkeit des Sensors beträchtlich vergrößert.

Ein weiterer Vorteil der durch die Codierung gestreckten Sensoranordnung besteht darin, daß zu jedem Zeitpunkt eine große Anzahl Elementarereignisse erfaßt werden und damit der korrelativen Auswertung mehr Information pro Zeiteinheit zugeführt wird. Dies führt zu größeren Werten für den Korrelationskoeffizienten.

Die Unterteilung der Gesamt-Apertur in einzelne Apertursegmente und die räumliche Verteilung dieser Apertursegmente entlang der Bewegungsrichtung ermöglicht eine vorteilhafte Ausgestaltung des Sensors, die darin besteht, daß die Apertursegmente gegeneinander winkelversetzt um den zu erfassenden Prozeß herum angeordnet sind. Auf diese Weise ist es möglich, den Prozeß von verschiedenen Richtungen zu beobachten, um zufällige Signale aus allen Richtungen abzuleiten.

Die durch die Unterteilung und Codierung bewirkte Verlängerung des Sensors in der Bewegungsrichtung ist im allgemeinen nicht störend. Wenn bei einer korrelativen Meßanordnung mit zwei Sensoren, die entlang der Bewegungsrichtung des Prozesses mit einem gegenseitigen Mittenabstand angeordnet sind, der kleinstmögliche Mittenabstand unerwünscht groß ist, kann dieser Mittenabstand nach einer besonders vorteilhaften Weiterbildung der Erfindung dadurch verringert werden, daß die einander zugewandten Endabschnitte der Sensoren derart verschachtelt sind, daß jeweils die wirksamen Apertursegmente eines Sensors in den Codelücken des anderen Sensors liegen. Natürlich muß die Codierung der Sensoraperturen entsprechend gewählt werden, doch ist dies im Regelfall möglich.

Ausführungsbeispiele der Erfindung sind in der Zeichnung dargestellt. In der Zeichnung zeigt:

Fig. 1 eine Anordnung zur berührungslosen Messung der Strömungsgeschwindigkeit eines Mediums in einer Rohrleitung,

Fig. 2 einen Querschnitt durch die Rohrleitung von Fig. 1 entlang der Schnittlinie A-B,

Fig. 3 die mittels des Korrelationssystems von Fig. 1 gewonnene Korrelationsfunktion,

Fig. 4 einen an einer Rohrleitung angeordneten kapazitiven Sensor zur Erläuterung der Ortsfrequenzfilterwirkung,

Fig. 5 die Stoßantwort des Sensors von Fig. 4

Fig. 6 das Frequenzspektrum der Stoßantwort von Fig. 5,

Fig. 7 einen nach der Erfindung ausgebildeten Sensor mit mehreren nach einer Codierung angeordneten Sensorsegmenten,

Fig. 8 die Stoßantwort des Sensors von Fig. 7,

Fig. 9 das Frequenzspektrum der Stoßantwort von Fig. 8,

Fig. 10 ein Beispiel für eine binäre pseudo-noise-Sequenz mit der Periode N = 15,

Fig. 11 das Frequenzspektrum der pseudo-noise-Sequenz von Fig. 10,

Fig. 12 zwei teilweise verschachtelte codierte Sensoranordnungen nach der Erfindung und

Fig. 13 einen nach der Erfindung ausgebildeten codierten Sensor, dessen Sensorsegmente mit gegenseitiger Winkelversetzung angeordnet sind.

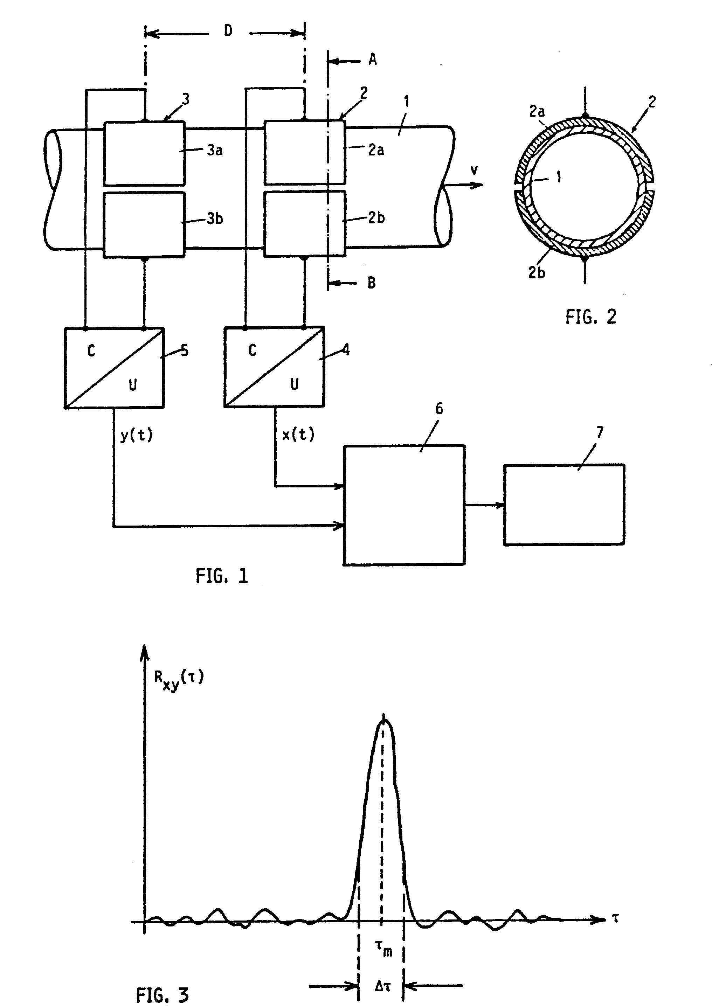

Fig. 1 zeigt als Anwendungsbeispiel für ein Korrelationssystem eine Anordnung zur berührungslosen Messung der Strömungsgeschwindigkeit v eines pneumatisch transportierten Feststoffs, z. B. Kohlestaub, in einer Rohrleitung 1. An der Rohrleitung 1 sind in einem genau bekannten Mittenabstand D zwei kapazitive Sensoren 2 und 3 angeordnet, mit deren Hilfe zufällige Signale gewonnen werden, die den zufälligen Dielektrizitätsschwankungen in der Strömung entsprechen. Der kapazitive Sensor 2 besteht aus zwei Elektroden 2a und 2b, die sich jeweils über einen Teil des Umfangs der Rohrleitung 1 erstrecken (Fig. 2) und mit den Eingangsklemmen eines Kapazitäts/Spannungs-Wandlers 4 verbunden sind, der am Ausgang ein Signal x(t) abgibt, das die vom kapazitiven Sensor 2 erfaßten Dielektrizitätsschwankungen wiedergibt. Der kapazitive Sensor 3 besteht aus zwei in gleicher Weise angeordneten Elektroden 3a und 3b, die mit den Eingangsklemmen eines Kapazitäts/Spannungs-Wandlers 5 verbunden sind, dessen Ausgangssignal y(t) die vom kapazitiven Sensor 3 erfaßten Dielektrizitätsschwankungen wiedergibt. Die Ausgänge der beiden Kapazitäts/Spannungs-Wandler 4 und 5 sind mit den beiden Eingängen eines Korrelators 6 verbunden, der die Kreuzkorrelationsfunktion zwischen den Signalen x(t) und y(t) berechnet.

Es ist bekannt, daß durch Bildung der Kreuzkorrelationsfunktion $R_{xy}(\tau)$ zwischen den beiden Signalen x(t) und y(t) die Strömungsgeschwindigkeit v in der Rohrleitung 1 ermittelt werden kann. Dies beruht darauf, daß die beim Vorbeigang der gleichen Strömungsbestandteile (Wirbel) an den beiden Sensoren 2 und 3 erzeugten Signale gewisse Ähnlichkeiten aufweisen, die ein Maximum in der Kreuzkorrelationsfunktion ergeben. Die Kreuzkorrelationsfunktion hat die mathematische Form

$$R_{xy}(\tau) = \lim_{T \to \infty} \frac{1}{T} \int_0^T x(t)\,y(t+\tau)\ dt. \quad (1)$$

Sie bedeutet, daß die Augenblickswerte des Signals x(t) mit den um eine Verschiebungszeit $\tau$ verschobenen Augenblickswerten des Signals y(t) multipliziert werden und der Mittelwert der Produkte über den Bereich der Beobachtungszeit T gebildet wird. Für jeden Wert der Verschiebungszeit $\tau$ erhält man einen Stützwert der Kreuzkorrelationsfunktion.

Fig. 3 zeigt das Ausgangssignal des Korrelators 6 als Funktion der Verschiebungszeit $\tau$, also die Korrelationsfunktion. Bei dem hier angegebenen Anwendungsfall hat die Kreuzkorrelationsfunktion ein Maximum bei einer bestimmten Verschiebungszeit $\tau_m$, die gleich der Laufzeit des Mediums vom Sensor 3 zum Sensor 2 ist, so daß gilt:

$$v = \frac{D}{\tau_m}.$$

Ein an den Korrelator 6 angeschlossenes Auswertegerät 7 untersucht die Kreuzkorrelationsfunktion auf ein Maximum und gibt die entsprechende Verschiebungszeit $\tau_m$ oder die daraus errechnete Strömungsgeschwindigkeit v aus.

Die gemessene Kreuzkorrelationsfunktion kann umso genauer ausgewertet werden, je größer der Wert des Kreuzkorrelationskoeffizienten $\rho_{xy}(\tau_m)$ an der Stelle des Korrelationsmaximums und je schmaler die Breite $\Delta\tau$ des Korrelation maximums ist. Die Breite des Korrelationsmaximums ist umgekehrt proportional zur Bandbreite der erfaßten Signale, und es gilt näherungsweise für die statistische Unsicherheit des detektierten Korrelationsmaximums

$$\sigma(\tau_m) = k \cdot \frac{1}{B^{1.5} T^{0.5}} \sqrt{\left(1 + \frac{1}{\rho_{xy}^2(\tau_m)}\right)}$$

Darin sind:

B:
Bandbreite in Hz
T:
Meßzeit in s
$\rho_{xy}$:
Kreuzkorrelationskoeffizient
$\sigma(\tau_m)$:
Standardabweichung der Laufzeit.

Für eine genaue Korrelationsauswertung ist es daher wichtig, daß die beiden zu korrelierenden Signale möglichst gut korreliert (d.h. möglichst ähnlich) sind und daß sie eine möglichst große Bandbreite B besitzen. Eine gute Korrelation setzt ferner voraus, daß die Sensoren möglichst gut die vorhandenen Inhomogenitäten detektieren und möglichst wenig durch externes Rauschen, z. B. elektronisches Rauschen gestört sind. Die Empfindlichkeit für die zu detektierenden Inhomogenitäten muß groß sein.

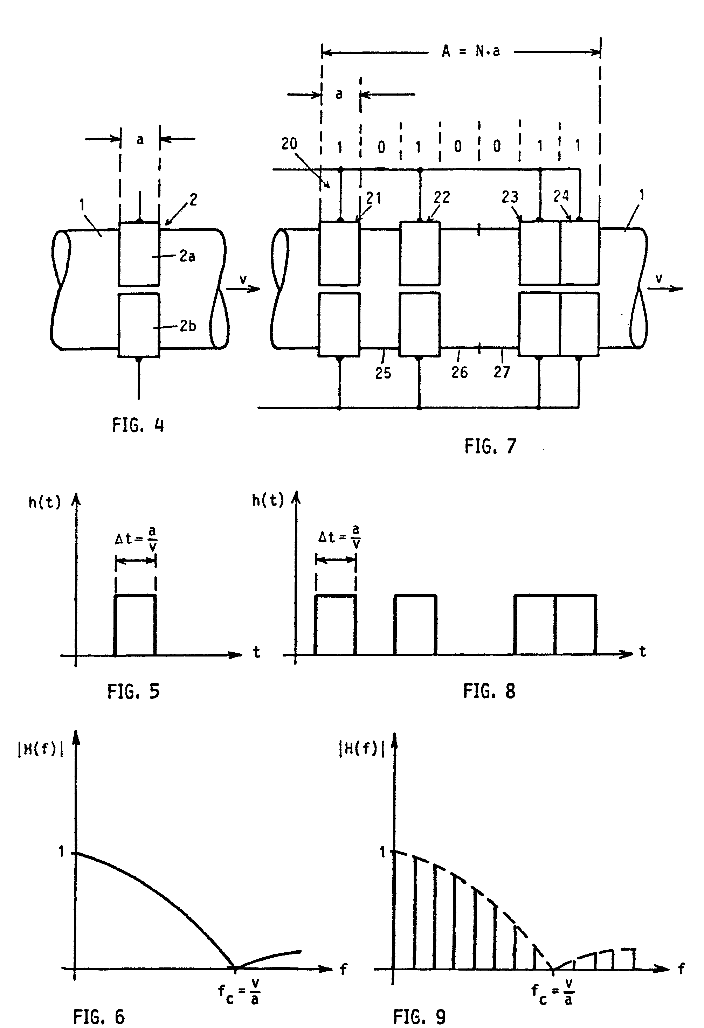

Diese Forderungen stehen teilweise im Widerspruch zueinander. Dies ergibt sich insbesondere daraus, daß jeder Sensor einen bestimmten Raumausschnitt erfaßt. Um dieses zu erläutern, ist in Fig. 4 nochmals die Rohrleitung 1 mit dem Sensor 2 dargestellt. Betrachtet man das Problem vereinfacht nur für die interessierende Bewegungsrichtung, in Fig. 4 also entlang der Rohrachse, so beträgt der Ausschnitt, welcher von den Elektroden 2a und 2b des kapazitiven Sensors 2 erfaßt wird, eine Strecke a, die gleich der Abmessung der Elektroden in der Bewegungsrichtung ist. Diesen Ausschnitt bezeichnet man in Anlehnung an die optischen Sensoren als die "Blende a" oder die "Apertur a". Es ist bekannt, daß jede Apertur ein räumliches Filter, nämlich ein sogenanntes Ortsfrequenzfilter darstellt. Auch wenn der Prozeß selbst unendlich breitbandig ist (d.h. unendlich kleine Inhomogenitäten aufzeigt), werden dennoch mit einem Sensor mit der endlichen Apertur a nur Frequenzen bis zu einer oberen Grenzfrequenz erfaßt, die durch die folgende Beziehung gegeben ist:

$$f_c = \frac{v/m \cdot s^{-1}}{a/m}$$

Fig. 5 zeigt die Stoßantwort h(t) für die rechteckförmige Apertur a des Sensors 2, d.h. die Antwort des Sensors auf eine unendlich schmale Erregung, als Funktion der Zeit t. Das Diagramm von Fig. 6 stellt den Frequenzgang H(f) des durch die Apertur a gebildeten Ortsfrequenzfilters dar, der durch Fourier-Transformation aus der Stoßantwort h(t) von Fig. 5 berechnet werden kann. Die Filterkurve von Fig. 8 hat den bekannten Verlauf der Funktion sin x/x, die auch Spaltfunktion genannt wird.

Zusammenfassend läßt sich feststellen, daß jede endliche Apertur ein Filter für die zu erfassenden Frequenzen darstellt, wobei die Grenzfrequenz dieses Ortsfrequenzfilters von der Geometrie und von der Geschwindigkeit abhängig ist.

Um die Empfindlichkeit eines Sensors zu erhöhen, ist es im allgemeinen erforderlich, den vom Sensor erfaßten Raumausschnitt zu vergrößern. Beispielsweise können die in Fig. 1 dargestellten kapazitiven Sensoren dadurch empfindlicher gemacht werden, daß größere Elektroden verwendet werden. Nach der vorstehenden Gleichung (3) wird aber durch die Vergrößerung der Elektroden in der Bewegungsrichtung auch die Tiefpaßfilterwirkung des Sensors verstärkt, so daß die Bandbreite der detektierten Signale sinkt. Eine Verringerung der Bandbreite ist aber nach der Formel (2) nicht erwünscht, weil dadurch die statistische Unsicherheit des Meßergebnisses vergrößert wird.

Die vorstehend anhand von kapazitiven Sensoren geschilderten Erscheinungen gelten in gleicher Weise auch für Sensoren anderer Art, die für die Detektion zufälliger Signale verwendet werden, wie Ultraschallschranken, optische Schranken, Ladungs- oder Leitfähigkeitssensoren usw. Welche dieser Sensoren jeweils verwendet werden, hängt davon ab, welche physikalische Inhomogenität besonders gut ausgeprägt ist bzw. sich besonders einfach detektieren läßt.

Anhand der Figuren 7 bis 9 wird, wieder für den Fall von kapazitiven Sensoren, erläutert, wie die Empfindlichkeit eines Sensors unter Aufrechterhaltung einer hohen Grenzfrequenz der Ortsfrequenzfilterwirkung wesentlich gesteigert werden kann. In Fig. 7 besteht der kapazitive Sensor 20 aus mehreren Segmenten 21, 22, 23, 24, von denen jedes die Apertur a hat. Die Sensor-Segmente 21, 22, 23, 24 sind unter Einfügung von Lücken 25, 26, 27 nach Art eines binären Codewortes angeordnet, das im Fall von Fig. 7 sieben Stellen hat und 1010011 lautet. Die von den einzelnen Sensor-Segmenten stammenden Signale werden summiert, im einfachsten Fall dadurch daß die einander entsprechenden Elektroden der Sensor-Segmente einfach miteinander verbunden sind, wie in Fig. 7 angedeutet ist. Es ist jedoch auch möglich, die Elektroden mit getrennten Ansteuerschaltungen zu verbinden, deren Ausgangssignale dann summiert werden.

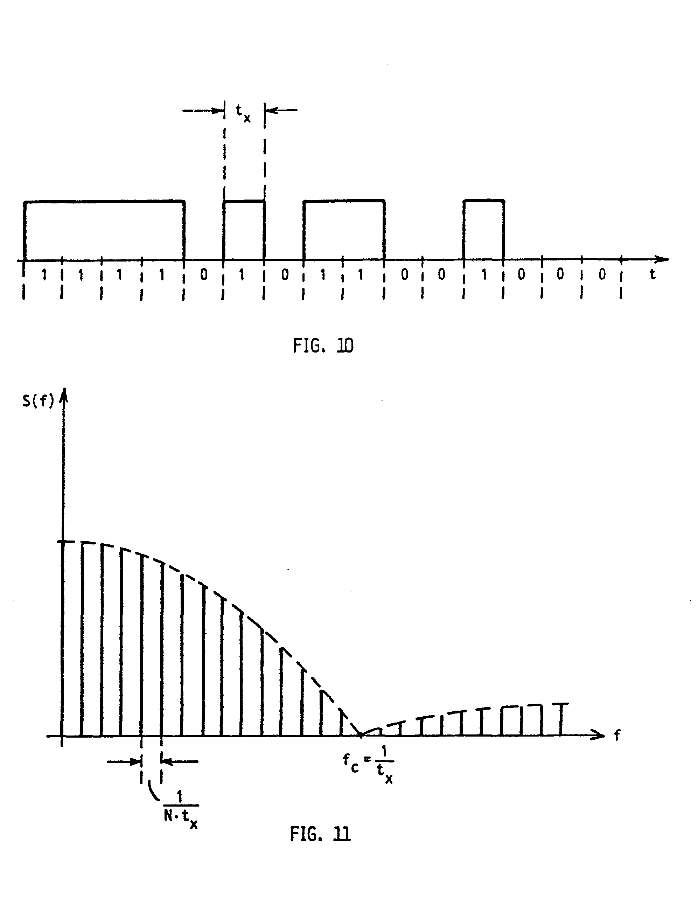

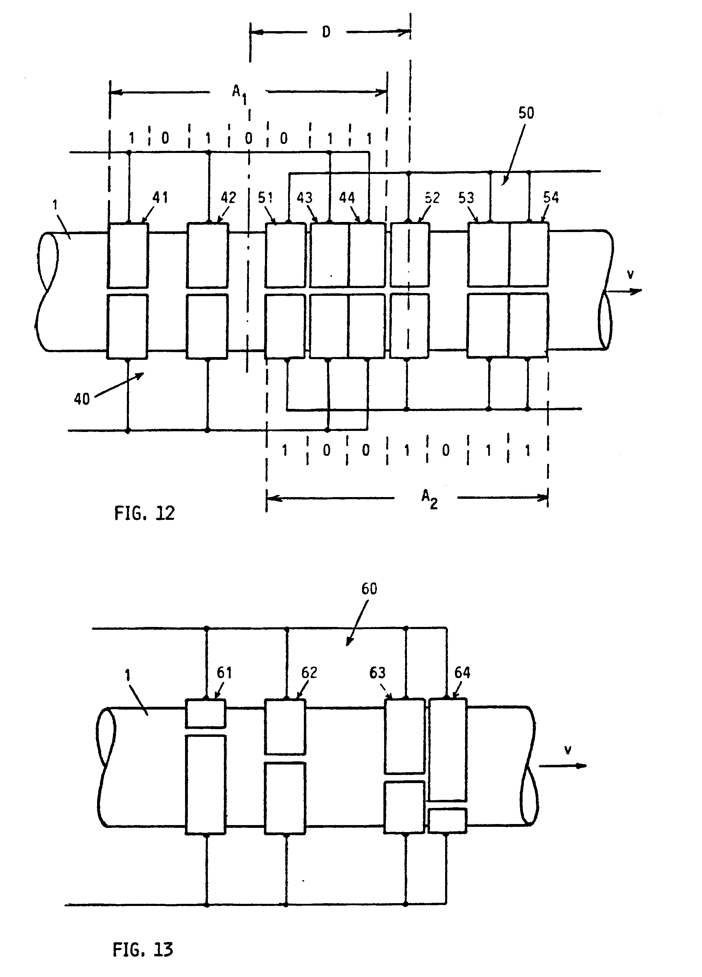

Die Codierung, nach der die Sensor-Segmente in Fig. 7 angeordnet sind, ist so gewählt, daß eine bestimmte Ortsfrequenzfilterwirkung erreicht wird. Aus dem Bereich der statistischen Nachrichtentechnik sind binäre Codes zur Datenübertratung bekannt, welche trotz einer großen gesamten Zeitdauer beim korrelativen Empfang ein zeitkomprimiertes Signal ergeben (Korrelations-Codes, Barker-Codes, binäre pseudozufällige Codes, m-Sequenzen u.ä.). Es sind außerdem binäre Codes bekannt, deren spektrale Eigenschaften bestimmten Gesetzmäßigkeiten gehorchen, beispielsweise so, daß das Spektrum des gesamten Codeworts eine große Ähnlichkeit mit dem Spektrum eines Einzelimpulses hat. Fig. 10 zeigt als typisches Beispiel für binäre pseudozufällige Codes ein Codewort der Klasse der pseudo-noise-Sequenzen mit der Periode N = 15, und in Fig. 11 ist das Frequenzspektrum dieses Codeworts dargestellt. Die Einhüllende des Spektrums einer pseudo-noise Sequenz ist gleich dem Verlauf der Spektraldichte eines Einzelimpulses, also die bekannte sin x/x-Funktion oder Spaltfunktion. Der wesentliche Unterschied besteht darin, daß daß Spektrum der pseudo-noise-Sequenz aus N diskreten Spektrallinien besteht, wenn N die Periode der pseudo-noise-Sequenz ist. Insbesondere für längere Perioden sind die Unterschiede zwischen diesem Spektrum und dem Spektrum des Einzelimpulses sehr klein.

Die räumliche Codierung der Sensor-Segmente von Fig. 7 entspricht einer Periode einer solchen pseudo-noise-Sequenz die zur Verdeutlichung mit der Länge N = 7 sehr kurz gewählt ist. Demzufolge ist auch die Stoßantwort des vom Sensor 20 gebildeten Ortsfrequenzfilters eine solche pseudo-noise-Sequenz als Funktion der Zeit (Fig. 8). Fig. 9 zeigt das Frequenzspekturm der Stoßantwort von Fig. 8, also den Frequenzgang des durch die Sensoranordnung von Fig. 7 gebildeten Ortsfrequenzfilters. Das Spektrum besteht aus sieben diskreten Spektrallinien, deren Einhüllende gleich dem Verlauf der Filterkurve eines einzelnen Sensor-Segments ist, also mit der Ortsfrequenzfilterkurve von Fig. 6 übereinstimmt. Insbesondere ist die Grenzfrequenz dieses Ortsfrequenzfilters unabhängig von der räumlichen Ausdehnung, in der Bewegungsrichtung gesehen, und nur abhängig von der Länge des Apertur-Segments eines einzelnen Sensor-Segments.

Ein Vergleich der Figuren 4 und 7 läßt erkennen, daß die Sensoranordnung von Fig. 7 eine Gesamtlänge A = N·a hat, also um den Faktor N größer ist als die Länge a des Sensors von Fig. 4. Die Gesamt-Apertur der Sensoranordnung von Fig. 7 ist durch die Summe der Apertur-Segmente der vorhandenen Sensor-Segmente gebildet. Bei der zur Codierung gewählten pseudo-noise-Sequenz sind (N+1)/2 Sensor-Segmente vorhanden. Demzufolge ist auch die Gesamt-Apertur und damit die Empfindlichkeit der Sensoranordnung von Fig. 7 gegenüber derjenigen von Fig. 4 um den Faktor (N+1)/2 vergrößert, während die Grenzfrequenz unverändert ist. Die Gesamtkapazität der Sensoranordnung von Fig. 7 hat sich, ideale Verläufe der Feldlinien vorausgesetzt, ebenfalls um den Faktor (N+1)/2 vergrößert. Dies ist insbesondere bei größeren Rohrquerschnitten von großem Vorteil, da in diesem Fall die Kapazität eines einzelnen ringförmigen Sensor-Segments sehr klein und daher schwierig auszuwerten wäre.

Ein weiterer Vorteil einer solchermaßen gestreckten und codierten Sensoranordnung, wie sie in Fig. 7 dargestellt ist, besteht darin, daß zu jedem Zeitpunkt eine große Anzahl Elementarereignisse erfaßt werden und damit der korrelativen Auswertung mehr Information pro Zeiteinheit zugeführt wird. Dies führt zu größeren Werten für den Korrelationskoeffizient $\rho_{xy}(\tau_m)$.

Wie aus der vorstehenden Beschreibung hervorgeht, ist die Annäherung der Ortfrequenzfilterkurve (Fig. 9) der codierten Sensoranordnung (Fig. 7) an die Ortsfrequenzfilterkurve (Fig. 6) des Einzel-Sensors (Fig. 7) umso besser, je größer die Periode N der pseudo-noise-Sequenz ist. Bei gleichen Abmessungen der einzelnen Sensor-Segmente bleibt die Einhüllende des Spektrums und damit auch die Grenzfrequenz unverändert, die Anzahl der Spektrallinien wird aber vergrößert. Ferner erhöht sich die Gesamt-Apertur und damit die Empfindlichkeit sowie im Fall von kapazitiven Sensoren die Gesamtkapazität. Allerdings wird auch die Länge A der Sensoranordnung in der zu erfassenden Bewegungsrichtung entsprechend größer. Dies kann zu räumlichen Problemen führen, wenn ineiner korrelativen Meßanordnung, wie im Fall von Fig. 1, zwei codierte Sensoranordnungen im Abstand D angeordnet werden müssen. Der Sensorabstand D ist durch die Entfernung von Mitte zu Mitte jeder Sensoranordnung gegeben, so daß der minimale Abstand etwa der Gesamtlänge A einer Sensoranordnung entspricht.

Fig. 12 zeigt, wiederum für den Fall von kapazitiven Sensoren, zwei codierte Sensoranordnungen 40 und 50, die zum Zweck der korrelativen Geschwindigkeitsmessung entlang der Rohrleitung 1 angeordnet sind, wobei jedoch der Mittenabstand D der beiden Sensoranordnungen wesentlich kleiner als die Gesamtlänge A1 bzw. A2 jeder der beiden Sensoranordnungen ist. Dies ist dadurch erreicht, daß die beiden codierten Sensoranordnungen "verschachtelt" sind. Damit dies möglich ist, müssen für die beiden Sensoranordnungen Codewörter ausgewählt werden, welche eine solche teilweise Verschachtelung zulassen, also Codewörter, bei denen eine gewisse Anzahl von Codelücken am Ende der ersten Sensoranordnung mit einer gewissen Anzahl von Codestegen am Anfang der zweiten Sensoranordnung (in der Bewegungsrichtung gesehen) übereinstimmen. Der Begriff "Codelücke" wird hierbei für die logische Null, der Begriff "Codesteg" für die logische Eins verwendet.

Die Sensoranordnung 40 von Fig. 12 enthält Sensor-Segmente 41, 42, 43, 44, die gemäß dem Codewort 1010011 angeordnet sind. Die Sensoranordnung 50 enthält Sensor-Elemente 51, 52, 53, 54, die gemäß dem Codewort 1001011 angeordnet sind. In beiden Fällen handelt es sich also um pseudo-noise-Sequenz mit der Periode N = 7. Die beiden letzten Sensor-Segmente 43 und 44 der Sensoranordnung 40 liegen in den beiden Codelücken zwischen den ersten Sensor-Segmenten 51, 52 der Sensoranordnung 50.

Insbesondere bei nichtrotationssymmetrischen Strömungsprofilen kann es erwünscht sein, den Prozeß von mehr als einer Richtung zu beobachten, um zufällige Signale aus allen Richtungen ableiten zu können. Dies ist mit den zuvor beschriebenen codierten Sensoranordnungen infolge der Unterteilung in Sensorsegmente und der räumlichen Ausdehnung auf besonders einfache Weise möglich, indem die aufeinanderfolgenden Sensor-Segmente mit einer gegenseitigen Winkelversetzung angeordnet, also gewissermaßen um den bewegten Prozeß "herumgewickelt" werden. Fig. 13 zeigt diese Maßnahme für den Fall einer kapazitiven Sensoranordnung 60 mit vier entlang der Rohrleitung 1 angeordneten Sensor-Segmenten 61, 62, 63, 64. Die beiden Elektroden aller Sensor-Segmente haben die gleiche, nahezu halbzylindrische Form, doch sind die diametralen Trennebenen zwischen den beiden Elektroden gegeneinander winkelversetzt. Auf diese Weise können aus dem bewegten Prozeß von vielen Seiten aus zufällige Signale abgeleitet werden. Dadurch ist es möglich, insbesondere im Einlaufgebiet einer Rohrströmung, Profileinflüsse durch die Anordnung der Elektroden zu vermindern oder sogar ganz auszuschalten.

Die Anwendung der zuvor für kapazitive Sensoranordnungen beschriebenen Maßnahmen auf andere Sensoren, wie Ultraschallsensoren, optische Sensoren, thermische Sensoren, ladungsempfindliche Sensoren, Leitfähigkeitssensoren usw., ist für den Fachmann aus der vorstehenden Beschreibung ohne weiteres ersichtlich. Unter der Apertur des Sensors ist dabei jeweils die auf den sich bewegenden Prozeß gerichtete Empfindlichkeitsfläche zu verstehen. Bei optischen Sensoren ist dies der Strahlengang, bei Ultraschallsensoren die abtastende Schallkeule usw. Jedem Sensor-Segment entspricht ein Apertur-Segment, und die Gesamt-Apertur der Sensoranordnung ergibt sich aus der Summe der Apertur-Segmente.

## Patentansprüche

1. Sensor zur Detektion zufälliger, zur korrelativen Signalverarbeitung geeigneter Signale aus einem relativ zum Sensor bewegten Prozeß, insbesondere für die korrelative Geschwindigkeits- oder Laufzeitmessung, mit einer für eine Kenngröße des bewegten Prozesses empfindlichen Gesamtapertur, die unter Einfügung von für die Kenngröße des bewegten Prozesses unempfindlichen Lücken in entlang der Bewegungsrichtung angeordnete Apertursegmente unterteilt ist, dadurch gekennzeichnet, daß die Apertursegmente und Lücken nach einer beim korrelativen Empfang ein zeitkomprimiertes Signal ergebenden binären Codierung in der Bewegungsrichtung angeordnet sind und daß die Ausgangssignale der Apertursegmente summiert werden.

2. Sensor nach Anspruch 1, dadurch gekennzeichnet, daß die Codierung einem binären pseudozufälligen Code entspricht.

3. Sensor nach Anspruch 2, dadurch gekennzeichnet, daß der binäre pseudozufällige Code einer Periode einer pseudo-noise-Sequenz entspricht.

4. Sensor nach einem der Ansprüche 1 bis 3, dadurch gekennzeichnet, daß die Apertursegmente gegeneinander winkelversetzt um den zu erfassenden Prozeß herum angeordnet sind.

5. Sensor nach einem der Ansprüche 1 bis 4, dadurch gekennzeichnet, daß die Apertursegmente durch entsprechend unterteilte Elektroden eines kapazitiven Sensors gebildet sind.

6. Sensor nach einem der Ansprüche 1 bis 4, dadurch gekennzeichnet, daß die Apertursegmente durch die entsprechend aufgeteilten Sende-/Empfangsschwinger eines Ultraschall-Sensors gebildet sind.

7. Sensor nach einem der Ansprüche 1 bis 4, dadurch gekennzeichnet, daß die Apertursegmente durch die entsprechend aufgeteilten Sende-/Empfangsflächen eines optischen Sensorsystems gebildet sind.

8. Sensor nach einem der Ansprüche 1 bis 4, dadurch gekennzeichnet, daß die Apertursegmente durch die entsprechend aufgeteilten Fühlbereiche eines thermischen Sensorsystems gebildet sind.

9. Sensor nach einem der Ansprüche 1 bis 4, dadurch gekennzeichnet, daß die Apertursegmente durch die entsprechend aufgeteilten Elektroden eines Leitfähigkeitsfühlers gebildet sind.

10. Sensor nach einem der Ansprüche 1 bis 4, dadurch gekennzeichnet, daß die Apertursegmente durch die entsprechend aufgeteilten Elektroden eines Ladungssensors gebildet sind.

11. Sensoren nach einem der vorhergehenden Ansprüche zur Verwendung in einer korrelativen Meßanordnung mit zwei Sensoren, die entlang der Bewegungsrichtung des Prozesses mit einem gegenseitigen Mittenabstand angeordnet sind, dadurch gekennzeichnet, daß die einander zugewandten Endabschnitte der beiden Sensoren derart verschachtelt sind, daß jeweils die wirksamen Apertursegmente eines Sensors in Lücken des anderen Sensors liegen.

## Claims

1. Sensor for the detection of random signals, being suitable for correlative signal processing, from a process in motion relative to the sensor, in particular for the purposes of correlative measurement of velocity or running time, with a total aperture sensitive to a parameter characteristic for the process in motion, which total aperture is subdivided into aperture segments which are arranged along the direction of motion with the inclusion of gaps which are not sensitive to the parameter characteristic of the process in motion, characterized in that the aperture segments and gaps are arranged along the direction of motion according to a binary coding resulting in a time-compressed signal on correlative reception and that the output signals of the aperture segments are totalled.

2. Sensor according to claim 1, characterized in that the coding corresponds to a binary pseudo-random code.

3. Sensor according to claim 2, characterized in that the binary pseudo-random code corresponds to a period of a pseudo-noise sequence.

4. Sensor according to any of claims 1 to 3, characterized in that the aperture segments are oriented at different angles around the process to be measured.

5. Sensor according to any of claims 1 to 4, characterized in that the aperture segments are constituted by the appropriately subdivided electrodes of a capacitive sensor.

6. Sensor according to any of claims 1 to 4, characterized in that the aperture segments are constituted by appropriately divided transmitting and receiving transducers of an ultrasonic sensor.

7. Sensor according to any of claims 1 to 4, characterized in that the aperture segments are constituted by the appropriately divided transmitting and receiving surfaces of an optical sensor.

8. Sensor according to any of claims 1 to 4, characterized in that the aperture segments are constituted by the appropriately divided probe areas of a thermic sensor system.

9. Sensor according to any of claims 1 to 4, characterized in that the aperture segments are constituted by the appropriately divided electrodes of a conductivity detector.

10. Sensor according to any of claims 1 to 4, characterized in that the aperture segments are constituted by the appropriately divided electrodes of a charge sensor.

11. Sensors according to any one of the preceding claims for use in a correlative measuring arrangement with two sensors arranged along the direction of motion of the process at a mutual centre-to-centre interval, characterized in that the adjacent end portions of the two sensors are interlaced in such a way that the effective aperture segments of each sensor are located in gaps of the other sensor.

## Revendications

1. Capteur pour la détection de signaux aléatoires convenant pour être traités par corrélation et fournis par un processus mobile par rapport au capteur, en particulier pour la mesure, par corrélation, d'une vitesse ou d'une durée de parcours, comportant une ouverture totale qui est sensible à une caractéristique du processus mobile et qui, du fait de l'insertion d'intervalles vides insensibles à la caractéristique du processus mobile, est divisée en segments de l'ouverture disposés le long de la direction du mouvement, caractérisé en ce que les segments de l'ouverture et les intervalles vides sont disposés selon un codage binaire donnant un signal comprimé dans le temps dans le cas d'une réception traitée par corrélation; et en ce que les signaux de sortie des segments de l'ouverture sont additionnés.

2. Capteur selon la revendication 1, caractérisé en ce que le codage correspond à un code binaire pseudo-aléatoire.

3. Capteur selon la revendication 2, caractérisé en ce que le code binaire pseudo-aléatoire correspond à une période d'une séquence de pseuso-bruit.

4. Capteur selon l'une des revendications 1 à 3, caractérisé en ce que les segments de l'ouverture sont disposés décalés angulairement l'un par rapport à l'autre autour du processus à saisir.

5. Capteur selon l'une des revendications 1 à 4, caractérisé en ce que les segments de l'ouverture sont formés par des électrodes, divisées de façon appropriée, d'un capteur capacitif.

6. Capteur selon l'une des revendications 1 à 4, caractérisé en ce que les segments de l'ouverture sont formés par les oscillateurs d'émission/réception, distribués de façon appropriée, d'un détecteur ultrasonique.

7. Capteur selon l'une des revendications 1 à 4, caractérisé en ce que les segments de l'ouverture sont formés par les surfaces d'émission/réception, distribuées de façon appropriée d'un système de capteur optique.

8. Capteur selon l'une des revendications 1 à 4, caractérisé en ce que les segments de l'ouverture sont formés par les zones de détection, distribuées de façon appropriée, d'un système de capteur thermique.

9. Capteur selon l'une des revendications 1 à 4, caractérisé en ce que les segments de l'ouverture sont formés par les électrodes, distribuées de façon appropriée, d'un détecteur de conductibilité.

10. Capteur selon l'une des revendications 1 à 4, caractérisé en ce que les segments de l'ouverture sont formés par les électrodes, distribuées de façon appropriées, d'un capteur de charge.

11. Capteurs selon l'une des revendications précédentes, pour emploi dans un dispositif de mesure par corrélation, comportant deux capteurs qui sont disposés avec leur milieu à une certaine distance l'un de l'autre le long de la direction du mouvement du processus, caractérisés en ce que les portions d'extrémité, dirigées l'une vers l'autre, des deux capteurs sont imbriquées de façon telle que les segments de l'ouverture actifs d'un capteur se trouvent respectivement dans les intervalles vides de l'autre capteur.

**0 108 876**

FIG. 1

FIG. 2

FIG. 3

FIG. 4

FIG. 7

FIG. 5

FIG. 8

FIG. 6

FIG. 9

FIG. 10

FIG. 11

FIG. 12

FIG. 13